# EUROPEAN PATENT SPECIFICATION

(11) **EP 2 894 082 B1**
(45) Date of publication and mention of the grant of the patent: **07.09.2016**
(21) Application number: 15150539.3
(22) Date of filing: 08.01.2015
(51) Int. Cl.: B62D 7/14, B62D 13/02, B62D 13/04, B62D 21/14

(54) **Transport vehicle having a variable width**
Transportfahrzeug mit veränderlicher Breite
Véhicule de transport ayant une largeur variable

(30) Priority: 08.01.2014 IT TO20140010
(43) Date of publication of application: 15.07.2015
(73) Proprietor: Industrie Cometto S.p.A., 12011 Borgo San Dalmazzo (IT)
(72) Inventor: Lippi, Fabrizio, 12010 VIGNOLO (IT); Terzuolo, Pierluigi, 12100 CUNEO (IT)
(74) Representative: Boggio, Luigi

(56) References cited:
- EP-A1- 0 577 992
- DE-A1- 2 219 447
- FR-A1- 2 399 351
- GB-A- 2 097 733

## Description

The present invention relates to a transport vehicle having a variable width.

In particular, the present invention relates to a rubber tired transport vehicle having a variable width.

In the field of transport by means of rubber tired vehicles the need is felt to modify the vehicle size, and in particular its width, as a function of the features of the load to be handled.

To date, it is known to use trailer or semitrailer type vehicles according to the attachment type to the tractor, and always comprising a chassis defining a load bed, a front steering trolley assembly and a rear steering trolley assembly.

The front and the rear assemblies comprise, in turn, a respective right row and a respective left row of trolleys thereof, each of which is coupled to the chassis in rotational or steering manner about a vertical axis thereof.

In order to allow an optimal steering according to a predetermined steering law, it is known to steer the trolleys of the rear assembly in the opposite sense with respect to the front assembly.

In order to do this, the front and rear assemblies each comprise a mechanically and/or hydraulically actuated steering device which interface with each other.

Each steering device comprises, in turn, a respective rocker arm actuating lever, which extends in the sense of the width of the vehicle between the respective right and left rows of trolleys and has two reciprocally opposite side arms, one for each of the respective rows of trolleys, and an intermediate portion hinged to the chassis between the two rows of trolleys themselves to pivot about an axis parallel to the steering axes of the trolleys themselves.

The rocker arm lever of the front assembly is connected by means of tie-rods/struts to a revolving input member of the vehicle steering control, e.g. the fifth wheel or the goose neck attachment bar.

The arms of each rocker arm lever are connected to an end trolley of the respective rows of trolleys by means of respective tie-rods/struts instead.

Furthermore, an end of a respective dual-acting hydraulic jack is coupled to each of the arms of the rocker arm levers, which jack is hydraulically connected to the other jacks to define a hydraulic control circuit of the rotation of the lever arm of the rear assembly and a parallel hydraulic safety circuit capable of allowing the rotation of both rocker arm levers also in case of breakage of a pipe or of a branch of the mentioned hydraulic control circuit.

The rocker arm levers described above thus allow, on one hand, to always steer the trolleys of each row of trolleys according to the predetermined steering law but determine, on the other hand, the vehicle width because they are mechanically connected to both the respective right and left trolley rows, in some solutions, and are in all cases always mechanically connected to the shafts of the hydraulic actuators, in others.

In some of the known solutions of the type defined above, the vehicle width is varied in discreet manner by using rocker arm levers which are adjustable in length in steps instead of the traditional fixed length rocker arm levers, each comprising at least one pair of portions coupled to each other in axially sliding manner and locked to each other, for example, by means of reference pins.

Precisely because of their conformation, such adjustable rocker arm levers may be relatively complex from a construction point of view, costly and in some cases complicated to adjust.

The adjustment of the length of such rocker arm levers takes a relatively long time, requires the use of specialized manpower and causes, in some cases, the undesired variation of the mentioned steering law.

The steering law is certainly varied in case of human error during the adjustment of the length of the rocker arm levers.

Such steering errors cannot be immediately detected and become more apparent only during transport when it is not possible to remedy them.

In such conditions and in all cases following the compromises determined by the step adjustment of the rocker arm levers, many of the trolleys work in non-optimal, and often critical, stress conditions.

A different kind of a variable width transport vehicle having the features listed in the preamble of claim 1 is disclosed, for example, in FR 2 399 351 A1.

It is the object of the present invention to provide a transport vehicle having a variable width, the construction features of which allow to solve the problems illustrated above in simple, cost-effective manner, and in particular to make vehicles of any width very rapidly.

It is a further object of the present invention to make a transport vehicle the variation in width of which does not require mechanical adjustments and does not affect the steering law of the trolleys during the step of design.

According to the present invention, a transport vehicle having a variable width is made, as claimed in claim 1. The invention will now be described with reference to the accompanying drawings which illustrate non-limitative embodiments thereof, in which:
figure 1 shows, diagrammatically and substantially in blocks, a transport vehicle having a variable width made according to the dictates of the present invention;
figure 2 shows, diagrammatically and substantially in blocks, a first preferred embodiment of the vehicle in the figure 1; and
figure 3 shows, diagrammatically and substantially in blocks, a second preferred embodiment of the vehicle in figure 1.

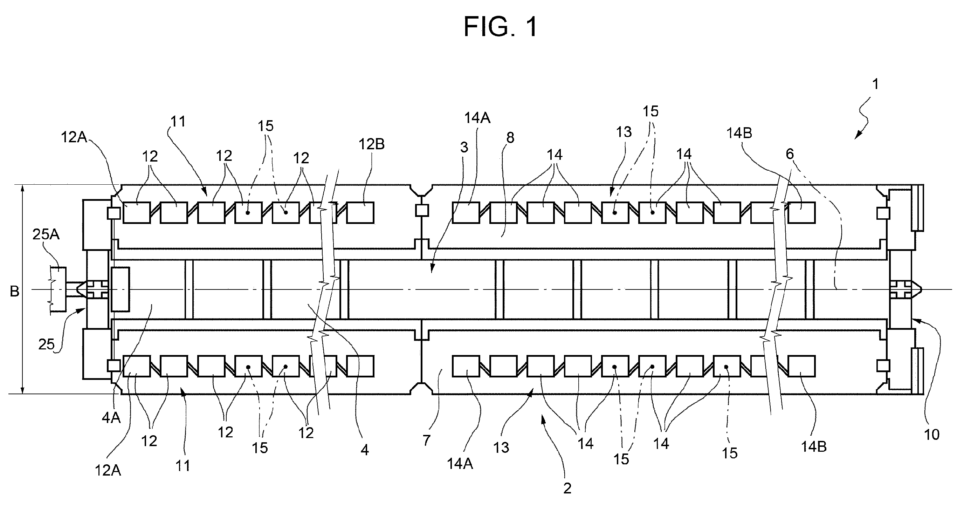

In figure 1, reference numeral 1 indicates a transport vehicle having a variable width as a whole.

In the particular example described, the vehicle 1, of the trailer or semitrailer type, comprises a chassis 2 defining a load bed 3 and, in turn, comprising an intermediate portion or floor 4 elongated in a longitudinal direction 6 of advancement of the vehicle 1 and two side portions or floors 7 and 8 elongated in the same direction 6 and arranged on opposite side parts of the intermediate floor 4 and in the longitudinal direction 6 itself.

A respective slide guide motorized device 10 is arranged in the vehicle 1, between each side floor 7,8 and the central floor 4, to vary the width B of the vehicle 1. The device 10, known in itself and not described in detail, allows the respective side floor 7,8 to be displaced orthogonally to the longitudinal direction 6 between a position near the floor 4 and corresponding to a minimum width position of the vehicle 1 and a distanced position of maximum width of the vehicle 1 itself.

Each side floor 7,8 carries a respective row 11 of front trolleys 12 and a respective row 13 of rear trolleys 14; the front row 11 and the rear row 13 are reciprocally aligned along a direction parallel to direction 6. Each trolley 12,14 is coupled to the respective side portion 7,8 by means of a respective fifth wheel, known in itself and not shown, to turn about a fixed hinge axis 15 thereof parallel to the other hinge axes 15 and orthogonal to the load bed 3.

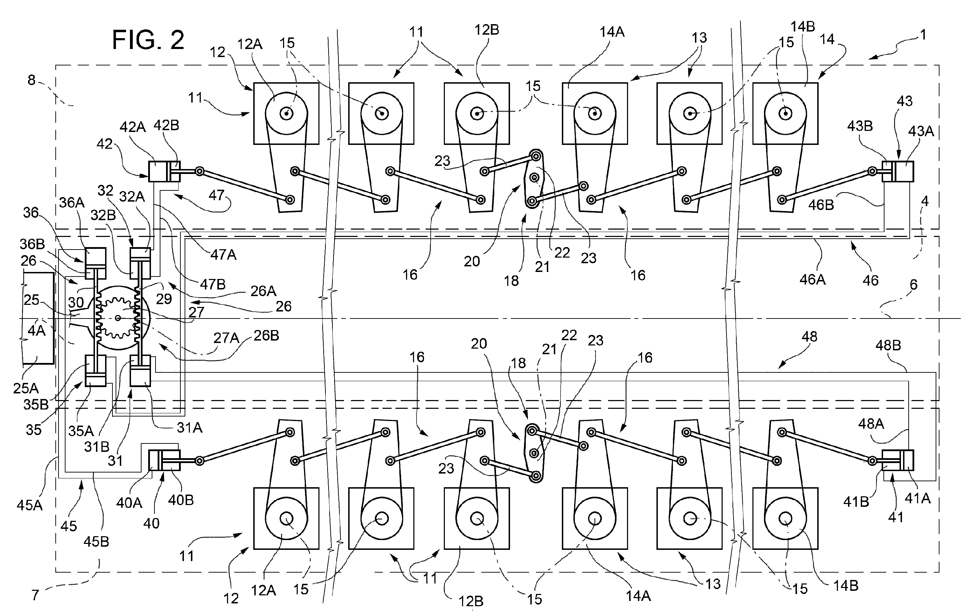

With reference to figure 2, the trolleys 12,14 of a same row 11,13 of trolleys comprised between the first trolley 12A,14A and the last trolley 12B and 14B are connected to each other in angularly determinate positions by means of the interposition of mechanical connecting rod-crank transmissions 16, known in themselves and not described in detail.

The last trolley 12B and the first trolley 14A are connected to each other in angularly determinate positions by means of a connecting rod-crank reversing mechanism 18 adapted to allow the steering or rotation of the trolleys 14 of the rear rows 13 in opposite sense with respect to the sense of rotation of the trolleys 12 of the front rows.

In the particular example described, each reversing device 18 comprises a rocker arm lever 20 having an intermediate portion hinged to the respective side floor 7,8 to rotate in opposite senses about a fixed hinge axis 21 parallel to the axes 15 and respective opposite arms 22 connected by means of respective tie-rod/struts 23 to the last trolley 12B of the respective front row 11 and to the first trolley 14A of the respective rear row 12, respectively.

Again with reference to figure 2, the intermediate floor 4 carries a member 25 (known in itself) coupled to a respective front portion 4A of the vehicle 1 for attaching to a tractor 25A (diagrammatically shown) for advancing the vehicle 1 itself. The attachment member 25 is connected to a front portion 4A of the intermediate floor 4 in rotational manner in opposite senses about a fixed hinge axis orthogonal to the load bed 3.

The vehicle 1 then comprises a steering assembly 26 of the trolleys 12,14 controlled by the attachment member 25.

In the particular described example, the assembly 26 comprises a hydraulic control device 26A carried by portion 4A in position adjacent to the member 25 and a mechanical transmission 26B in addition to the reversing devices 18. The mechanical transmission 26B comprises, in turn, an input toothed wheel 27 of the steering control, which is coupled to the portion 4A in rotational manner about a fixed vertical axis 27A and is connected in angularly determinate manner to the attachment device 25. In the particular example described, the wheel 27 is integrally connected to the member 25 to rotate about the axis 27A simultaneously with the member 25 itself. Alternatively, the wheel 27 is coupled in angularly determinate manner to a fifth wheel (not shown) of the member 25 or is rotated about axis 27A by a mechanical arm and lever transmission interposed between the member 25 and the wheel 27 itself.

Again with reference to figure 2, the mechanical transmission 26B further comprises a pair of racks indicated by reference numerals 29 and 30 in addition to the wheel 27. The racks 29 and 30 are parallel to each other, are arranged on diametrically opposite side of the toothed wheel 27 and mesh with the toothed wheel 27 itself to translate in opposite senses during the rotation of the toothed wheel 27.

The hydraulic device 26A comprises reciprocally equal, two dual-acting hydraulic jacks 31 and 32, which have their opposite output rods stably connected to the opposite ends of the rack 29. The jacks 31 and 32 then each comprise two respective variable volume chambers, indicated by reference numerals 31A and 31B and by reference numerals 32A and 32B, respectively, the chambers 31B and 32B being crossed by the respective shafts.

The hydraulic device 26A further comprises two dual-acting hydraulic jacks 35 and 36 conveniently equal to each other and to the jacks 31 and 32; the hydraulic jacks 35 and 36 have their opposite output rods stably connected to the opposite ends of the rack 30 and a respective pair of variable volume chambers, indicated by reference numerals 35A and 35B and by reference numerals 36A and 36B, respectively, the chambers 35B and 36B being crossed by the respective shafts.

Again with reference to figure 2, the assembly 26 further comprises four dual-acting actuating or steering hydraulic jacks of the trolleys, indicated by reference numerals 40, 41, 42 and 43, conveniently equal to each other. The jacks 40 and 41 are carried by the floor 7 to actuate trolley 12A and trolley 14B, respectively. Specifically, jack 40 comprises a shaft connected to the trolley 12A by means of a respective tie-rod/strut and has two chambers 40A and 40B, chamber 40B being crossed by the shaft, while jack 41 comprises a shaft connected to the trolley 14B by means of a respective tie-rod/strut and has two chambers 41A and 41B, chamber 41B being crossed by the shaft.

The jacks 42 and 43 are carried by the floor 8 to actuate the trolley 12A and the trolley 14B, respectively. Specifically, jack 42 comprises a shaft connected to the trolley 12A by means of a respective tie-rod/strut and has two chambers 42A and 42B, chamber 42B being crossed by the shaft, while jack 43 comprises a shaft connected to the trolley 14B by means of a respective tie-rod/strut and has two chambers 43A and 43B, chamber 43B being crossed by the shaft.

Again with reference to figure 2, the assembly 26 finally comprises four double conduit hydraulic pipes 45, 46, 47 and 48 which can be configured to adapt to the change of width of the vehicle 1. Hereinafter, the word "configurable" means any pipe which may either be flexible or telescopically extendible or not, or even wound in unwindable manner so as to allow the floors 7 and 8 to move freely without constraints with respect to the floor 4 between the mentioned near and distanced positions.

Specifically, the pipe 45 comprises two reciprocally connecting conduits 45A and 45B of the chambers 36B and 40B and of the chambers 36A and 40A, respectively; the pipe 46 comprises two reciprocally connecting conduits 46A and 46B of the chambers 35A and 43A and of the chambers 35A and 43B, respectively; the pipe 47 comprises two reciprocally connecting conduits 47A and 47B of the chambers 32A and 42A and of the chambers 32A and 42B, respectively; the pipe 48 comprises two reciprocally connecting conduits 48A and 48B of the chambers 31B and 41B and of the chambers 31A and 41A, respectively.

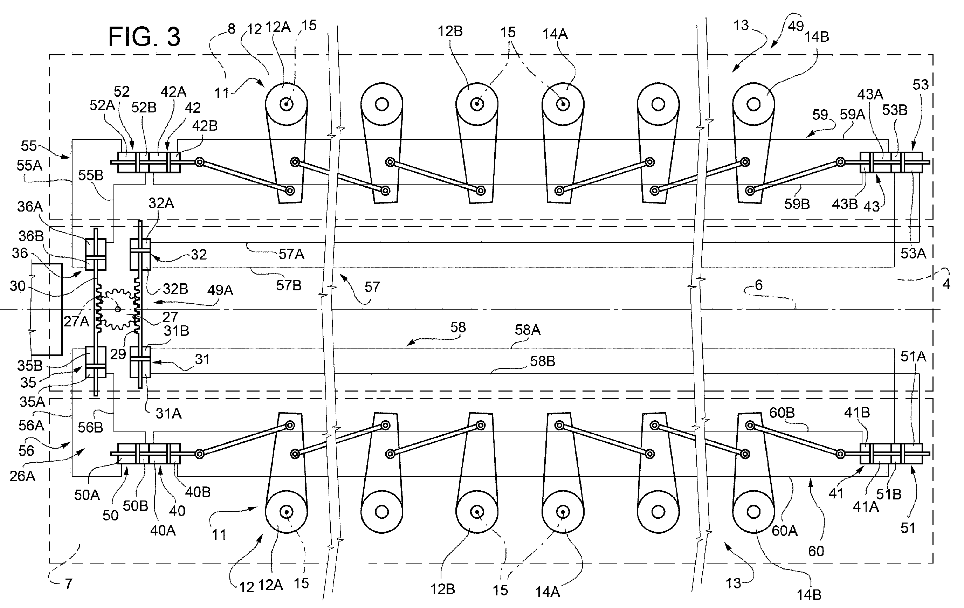

The embodiment illustrated in figure 3 relates to a vehicle 49, which differs from the vehicle 1 (fig.2) for some construction details and for a different hydraulic connection, and in which the parts in common to those of the vehicle 1 are indicated, where possible, with the same reference numbers of the corresponding parts of the vehicle 1.

The vehicle 49 comprises a steering assembly 49A, which differs from the assembly 26 in that it is free from the reversing devices 18 and comprises respective hydraulic jacks 50, 51, 52 and 53 associated to the hydraulic jacks 40, 41, 42 and 43, conveniently equal to one another (figure 3).

The jacks 50 and 51 are carried by the floor 7, and specifically the jack 50 is directly connected to the jack 40 and comprises a through shaft integrally connected to the shaft of the jack 40 and two chambers 50A and 50B both crossed by the respective shaft, while the jack 51 comprises a shaft integrally connected to the shaft of the jack 41 and has two chambers 51A and 51B both crossed by the respective shaft.

The jacks 52 and 53 are carried by the floor 8, and specifically the jack 52 comprises a shaft directly connected to the shaft of the jack 42 and has two chambers 53A and 52B, both crossed by the respective shaft, while the jack 53 comprises a shaft integrally connected to the shaft of the jack 42 and has two chambers 53A and 51B both crossed by the respective shaft.

Conveniently, the jacks 50-53 comprise respective liners which constitute the extension of the liners of the corresponding jacks 40-43 and respective shafts aligned with respect to each other and defined by a body made in one piece.

Again, with reference to figure 3, the assembly 49A finally comprises four double conduit hydraulic pipes 55, 56, 57 and 58, instead of the pipes 45-48, configurable to adapt to the width variation of the vehicle 1 in the same way as the pipes 45-48 themselves.

Specifically, the pipe 55 comprises two reciprocally connecting conduits 55A and 55B of the chambers 36B and 52A and of the chambers 36A and 53A, respectively; the pipe 56 comprises two reciprocally connecting conduits 56A and 56B of the chambers 35B and 50A and of the chambers 35A and 50B, respectively; the pipe 57 comprises two reciprocally connecting conduits 57A and 57B of the chambers 32A and 53A and of the chambers 32A and 53B, respectively; the pipe 58 comprises two reciprocally connecting conduits 58A and 58B of the chambers 31B and 51B and of the chambers 31A and 51A, respectively.

The assembly 49A then comprises further two hydraulic pipes 59 and 60 connecting the jacks 42 and 43 to each other and the jacks 40 and 41, respectively. Specifically, the pipe 59 comprises two reciprocally connecting conduits 59A and 59B of the chambers 42B and 43A and of the chambers 42A and 43B, respectively; the pipe 60 comprises two reciprocally connecting conduits 60A and 60B of the chambers 40B and 41A and of the chambers 40A and 41B, respectively.

From the above, it is apparent that both described assemblies 26 and 49A allow to vary the width B of the vehicle 1,49 in absolutely arbitrary and continuous manner. Both assemblies 26 and 49A then allow to maintain the steering law of the trolleys 12,14 established during the step of designing unchanged regardless of the width B of the vehicle.

This derives from the fact that in the described vehicles 1 and 49, the steering assemblies 26 and 49A have a single mechanical connection between the input member 25 of the steering control and the steering devices of the trolleys; such a mechanical angular condition is mechanically separate from the components/actuators provided aboard the side floors 7,8 to which the trolleys 12,14 are coupled. Such side floors 7,8 are thus independently mobile units from and towards the intermediate floor 4 and actuated only by hydraulic actuators connected to each other and to the control device 26A carried by the intermediate floor 4 by simple and common flexible or extendable hydraulic pipes which because of their nature do not restrict the relative movement of parts connected to them at all.

Again in the vehicle 1, the steering assembly 26 has two mechanical reversing devices 18 between the respective two front and rear rows but also of devices which do not have mechanical constraints with the intermediate floor 4 because they are fully carried by the side floors 7,8.

From the above, it is apparent that the described jacks may be replaced by different jacks and/or jacks connected to one another in different manner from that shown.

## Claims

1. A transport vehicle (1) having a variable width (B), the vehicle (1) comprising: a chassis (2) defining a load bed (3) and comprising an intermediate portion (4) elongated in a longitudinal advancement direction (6) of the vehicle and at least two elongated side portions (7)(8) arranged on opposite sides of the intermediate portion (4) and movable orthogonally to the longitudinal direction (B) towards and away from the intermediate portion (4); a row (11) of front trolleys (12) and a row (13) of rear trolleys (14) hinged to the respective side portion to rotate about respective steering axes (15) orthogonal to the load bed (3) for each side portion; a revolving input member (25) of a steering control of the vehicle coupled to said intermediate portion (4); and steering means (26) of said trolleys angularly coupled to said revolving input member (25), said steering means comprising a hydraulic control block (26A) and a mechanical transmission (26B) interposed between said revolving input member and said hydraulic control block both connected only to said intermediate portion (4); and, for each side portion (7)(8), a first hydraulic actuating block (40,42) for the front trolleys and a second hydraulic actuating block (41,43) for the rear trolleys; said first and second hydraulic blocks and said reversing means being connected only to the respective said side portions (7)(8); hydraulic pipes (45,46,47,48) extending between said intermediate (4) and side portions (7)(8), hydraulically connecting said hydraulic control block and said first and second hydraulic actuating blocks and being configurable to follow the displacement of said side portions (4) (7) (8) with respect to said intermediate portion; **characterized in that** motion reversing means (20) are provided for steering the front trolleys (12) in a direction opposite to the rear trolleys (14) and **in that** said hydraulic control block (26A) comprises a pair of first dual-acting hydraulic jacks (31,32) having respective first shafts firmly connected to each other, and a pair of second dual-acting hydraulic jacks (35,36) having respective second shafts firmly connected to each other; said mechanical transmission (26B) comprising first and second rotary-to-linear motion conversion means (27,29,30) interposed between said revolving input member (25) of the steering control and said first and second shafts, respectively.

2. A vehicle according to claim 1, **characterized in that** said first and second rotary-to-linear motion conversion means comprise a toothed wheel (27) hinged to said intermediate portion (4) to rotate about a fixed hinge axis (27A) and a pair of racks (29,30) meshing with said toothed wheel (27).

3. A vehicle according to claim 2, **characterized in that** the shafts of said first hydraulic jacks (31) (32) extend from opposite sides of one (29) of said racks and the shafts of said second hydraulic jacks (35)(36) extend from opposite sides of the other (30) of said racks.

4. A vehicle according to claim 3, **characterized in that** said racks are parallel to each other and arranged diametrically opposite to said toothed wheel (27).

5. A vehicle according to any one of the preceding claims, **characterized in that** said first (40,42) and second hydraulic blocks (41,43) comprise a third (40;42) and a fourth dual-acting hydraulic jack (41;43), respectively, having respective output rods coupled to one of the trolleys of the respective row of trolleys; said hydraulic pipes (45,46,47,48) comprising first hydraulic connection pipes (47) (46) connecting the third (42) and fourth jacks (43) of a side portion to one of the first jacks (32), respectively, and to one of the second jacks (35), respectively, and second hydraulic connection pipes (45) (48) of the third and fourth jacks of the other side portion to the second (36) and first hydraulic jacks (31), respectively.

6. A vehicle according to any one of the claims from 1 to 4, **characterized in that** said first and second hydraulic blocks comprise a third (50) (52) and a fourth (51) (53) dual-acting hydraulic jack, respectively, having respective output rods acting on one of the trolleys of the respective row of trolleys; said hydraulic pipes comprising, for each side portion, a first and a second hydraulic connection pipe (55,56) (57,58) of one of the second hydraulic jacks (35) (36) to the third jack (41)(43), respectively, and of one of the first hydraulic jacks (31) (32) to the fourth hydraulic jack, respectively.

7. A vehicle according to claim 6, **characterized in that** said steering assembly further comprises, for each said third and fourth jack, a fifth (40) (41) and a sixth dual-acting hydraulic jack (42) (43), respectively, having its output rods integrally connected to the rods of the corresponding third and fourth jacks; a further hydraulic pipe (59) (60) being provided for each side portion in order to connect the chambers of said fifth (40) (41) and sixth jacks (42) (43) to each other.

## Patentansprüche

1. Transportfahrzeug (1), das eine variable Breite (B) aufweist, das Fahrzeug (1) umfassend: ein Chassis (2), das eine Ladefläche (3) definiert und das einen Zwischenabschnitt (4) umfasst, der in eine Längsvorschubrichtung (6) des Fahrzeugs verlängert ist, und mindestens zwei verlängerte Seitenabschnitte (7) (8), die auf gegenüberliegenden Seiten des Zwischenabschnittes (4) angeordnet sind und orthogonal zur Längsrichtung (B) in Richtung und weg von dem Zwischenabschnitt (4) beweglich sind; eine Reihe (11) von vorderen Wagen (12) und eine Reihe (13) von hinteren Wagen (14), die an dem jeweiligen Seitenabschnitt drehbar angebracht sind, um um entsprechende Lenkachsen (15) orthogonal zur Ladefläche (3) für jeden Seitenabschnitt zu rotieren; ein revolvierendes Eingangselement (25) von einer Lenksteuerung des Fahrzeugs, das mit dem Zwischenabschnitt (4) gekoppelt ist; und Lenkmittel (26) von den Wagen, die schräg mit dem revolvierenden Eingangselement (25) gekoppelt sind, wobei das Lenkmittel einen hydraulischen Steuerungsblock (26A) und ein mechanisches Getriebe (26B) umfasst, die zwischen das revolvierende Eingangselement und den hydraulischen Steuerungsblock geschaltet sind, wobei beide nur mit dem Zwischenabschnitt (4) verbunden sind; und für jeden Seitenabschnitt (7) (8), einen ersten hydraulischen Betätigungsblock (40, 42) für die vorderen Wagen und einen zweiten hydraulischen Betätigungsblock (41, 43) für die hinteren Wagen; wobei der erste und zweite hydraulische Block und das Umsteuerungsmittel nur mit dem jeweiligen der Seitenabschnitte (7) (8) verbunden sind; hydraulische Leitungen (45, 46, 47, 48), die sich zwischen den Zwischen- (4) und Seitenabschnitten (7) (8) erstrecken, und hydraulisch den hydraulischen Steuerungsblock und den ersten und zweiten hydraulischen Betätigungsblock verbinden und die konfigurierbar sind, der Verschiebung der Seitenabschnitte (4) (7) (8) in Bezug auf den Zwischenabschnitt zu folgen; **dadurch gekennzeichnet, dass** Bewegungsumkehrmittel (20) zur Verfügung stehen, zum Lenken der vorderen Wagen (12) in eine Richtung entgegengesetzt zu den hinteren Wagen (14) und dadurch, dass der hydraulische Steuerungsblock (26A) ein Paar von ersten, dual wirkenden, hydraulischen Heber (31, 32) umfasst, die jeweils erste Wellen aufweisen, die fest miteinander verbunden sind; und ein Paar von zweiten, dual wirkenden, hydraulischen Heber (35, 36) umfasst, die jeweils zweite Wellen aufweisen, die fest miteinander verbunden sind; wobei das mechanische Getriebe (26B) erste und zweite Dreh- in Linearbewegungsumwandlungsmittel (27, 29, 30) umfasst, die jeweils zwischen das revolvierende Eingangselement (25) der Lenksteuerung und die erste und zweite Welle geschaltet sind.

2. Fahrzeug gemäß Anspruch 1, **dadurch gekennzeichnet, dass** das erste und zweite Dreh- in Linearbewegungsumwandlungsmittel ein Zahnrad (27) umfasst, das gelenkig mit dem Zwischenabschnitt (4) gelagert ist, um um ein fixe Drehachse (27A) zu rotieren und ein Paar Gestelle (29, 30), die mit dem Zahnrad (27) ineinandergreifen.

3. Fahrzeug gemäß Anspruch 2, **dadurch gekennzeichnet, dass** sich die Wellen der ersten hydraulischen Heber (31) (32) von gegenüberliegenden Seiten von einer (29) der Wellen erstrecken und dass sich die Wellen der zweiten hydraulischen Heber (35) (36) von gegenüberliegenden Seiten von der anderen (30) der Wellen erstrecken.

4. Fahrzeug gemäß Anspruch 3, **dadurch gekennzeichnet, dass** die Gestelle parallel zueinander sind und diametral gegenüber dem Zahnrad (27) angeordnet sind.

5. Fahrzeug gemäß einem der vorherigen Ansprüche, **dadurch gekennzeichnet, dass** die ersten (40, 42) und zweiten hydraulischen Blöcke (41, 43) einen dritten (40; 42) und einen vierten dual wirkenden hydraulischen Heber (41; 43) umfassen, die jeweils entsprechende Ausgangsstangen aufweisen, die mit einem der Wagen der jeweiligen Reihe der Wagen gekoppelt sind; wobei die hydraulischen Leitungen (45, 46, 47, 48) erste hydraulische Verbindungsleitungen (47) (46) umfassen, die den dritten (42) und vierten Heber (43) von einem Seitenabschnitt mit einem der ersten Heber (32) entsprechend, und mit einem der zweiten Heber (35) entsprechend, und zweite hydraulische Verbindungsleitungen (45) (48) der dritten und vierten Heber des anderen Seitenabschnitts mit den zweiten (36) und ersten hydraulischen Hebeblöcken (31) entsprechend verbindet.

6. Fahrzeug nach einem der Ansprüche 1 bis 4, **dadurch gekennzeichnet, dass** der erste und zweite hydraulische Block jeweils einen dritten (50) (52) und einen vierten (51) (53) dual wirkenden hydraulischen Heber umfasst, die entsprechende Ausgangsstangen umfassen, die auf eine der Wagen der entsprechenden Reihe der Wagen wirken; wobei die hydraulischen Leitungen für jeden Seitenabschnitt jeweils eine erste und zweite hydraulische Verbindungsleitung (55, 56) (57, 58) von einem der zweiten hydraulischen Heber (35) (36) zu dem dritten Heber (41) (43), und von einem der ersten hydraulischen Heber (31) (32) zu dem vierten hydraulischen Heber umfassen.

7. Fahrzeug gemäß Anspruch 6, **dadurch gekennzeichnet, dass** der Lenkaufbau weiterhin für jeden der dritten und vierten Heber, jeweils einen fünften (40) (41) und einen sechsten dual wirkenden hydraulischen Heber (42) (43) umfasst, der seine Ausgangsstangen integral mit den Stangen der entsprechenden dritten und vierten Heber verbunden aufweist; eine weitere vierte hydraulische Leitung (59) (60), die für jeden Seitenabschnitt zur Verfügung steht, um die Kammern der fünften (40) (41) und sechsten Heber (42) (43) miteinander zu verbinden.

## Revendications

1. Véhicule de transport (1) ayant une largeur variable (B), le véhicule (1) comprenant : un châssis (2) définissant un lit de chargement (3) et comprenant une partie intermédiaire (4) allongée dans une direction d'avancement longitudinale (6) du véhicule et au moins deux parties latérales allongées (7) (8) agencées sur des côtés opposés de la partie intermédiaire (4) et pouvant se déplacer orthogonalement à la direction longitudinale (B) vers la partie intermédiaire (4) et loin de celle-ci ; une rangée (11) de chariots avant (12) et une rangée (13) de chariots arrière (14) articulées à la partie latérale respective pour tourner autour d'axes de direction respectifs (15) orthogonaux au lit de chargement (3) pour chaque partie latérale ; un élément d'entrée tournant (25) d'une commande de direction du véhicule couplé à ladite partie intermédiaire (4) ; et un moyen de direction (26) desdits chariots couplé de manière angulaire audit élément d'entrée tournant (25), ledit moyen de direction comprenant un bloc de commande hydraulique (26A) et une transmission mécanique (26B) interposée entre ledit élément d'entrée tournant et ledit bloc de commande hydraulique tous deux raccordés uniquement à ladite partie intermédiaire (4) ; et, pour chaque partie latérale (7) (8), un premier bloc d'actionnement hydraulique (40, 42) pour les chariots avant et un deuxième bloc d'actionnement hydraulique (41, 43) pour les chariots arrière ; lesdits premier et deuxième blocs hydrauliques et lesdits moyens d'inversion étant raccordés uniquement auxdites parties latérales (7) (8) respectives ; des tuyaux hydrauliques (45, 46, 47, 48) s'étendant entre lesdites parties intermédiaire (4) et latérales (7) (8), raccordant hydrauliquement ledit bloc de commande hydraulique et lesdits premier et deuxième blocs d'actionnement hydrauliques et pouvant être configurés pour suivre le déplacement desdites parties latérales (4) (7) (8) par rapport à ladite partie intermédiaire ; **caractérisé en ce que** des moyens d'inversion de mouvement (20) sont fournis pour diriger les chariots avant (12) dans une direction opposée aux chariots arrière (14) et **en ce que** ledit bloc de commande hydraulique (26A) comprend une paire de premiers vérins hydrauliques à double effet (31, 32) ayant des premiers arbres respectifs fermement raccordés l'un à l'autre, et une paire de deuxièmes vérins hydrauliques à double effet (35, 36) ayant des deuxièmes arbres respectifs fermement raccordés l'un à l'autre ; ladite transmission mécanique (26B) comprenant des premier et deuxième moyens de conversion de mouvement rotatif en mouvement linéaire (27, 29, 30) interposés entre ledit élément d'entrée tournant (25) de la commande de direction et lesdits premiers et deuxièmes arbres, respectivement.

2. Véhicule selon la revendication 1, **caractérisé en ce que** lesdits premier et deuxième moyens de conversion de mouvement rotatif en mouvement linéaire comprennent une roue dentée (27) articulée à ladite partie intermédiaire (4) pour tourner autour d'un axe d'articulation fixe (27A) et une paire de crémaillères (29, 30) s'engrenant avec ladite roue dentée (27).

3. Véhicule selon la revendication 2, **caractérisé en ce que** les arbres desdits premiers vérins hydrauliques (31) (32) s'étendent à partir de côtés opposés d'une crémaillère (29) desdites crémaillères et les arbres desdits deuxièmes vérins hydrauliques (35) (36) s'étendent à partir de côtés opposés de l'autre crémaillère (30) desdites crémaillères.

4. Véhicule selon la revendication 3, **caractérisé en ce que** lesdites crémaillères sont parallèles l'une à l'autre et agencées de manière diamétralement opposée à ladite roue dentée (27).

5. Véhicule selon l'une quelconque des revendications précédentes, **caractérisé en ce que** lesdits premier (40, 42) et deuxième blocs hydrauliques (41, 43) comprennent des troisième (40 ; 42) et quatrième (41 ; 43) vérins hydrauliques à double effet, respectivement, ayant des tiges de sortie respectives couplées à l'un des chariots de la rangée respective de chariots ; lesdits tuyaux hydrauliques (45, 46, 47, 48) comprenant des premiers tuyaux de raccordement hydrauliques (47) (46) raccordant les troisième (42) et quatrième (43) vérins d'une partie latérale à l'un des premiers vérins (32), respectivement et à l'un des deuxièmes vérins (35), respectivement, et des deuxièmes tuyaux de raccordement hydrauliques (45) (48) raccordant les troisième et quatrième vérins de l'autre partie latérale aux deuxièmes (36) et premiers (31) vérins hydrauliques, respectivement.

6. Véhicule selon l'une quelconque des revendications 1 à 4, **caractérisé en ce que** lesdits premier et deuxième blocs hydrauliques comprennent des troisième (50) (52) et quatrième (51) (53) vérins hydrauliques à double effet, respectivement, ayant des tiges de sortie respectives agissant sur l'un des chariots de la rangée respective de chariots ; lesdits tuyaux hydrauliques comprenant, pour chaque partie latérale, des premier et deuxième tuyaux de raccordement hydrauliques (55, 56) (57, 58) raccordant l'un des deuxièmes vérins hydrauliques (35) (36) au troisième vérin (41) (43), respectivement, et l'un des premiers vérins hydrauliques (31) (32) au quatrième vérin hydraulique, respectivement.

7. Véhicule selon la revendication 6, **caractérisé en ce que** ledit ensemble de direction comprend en outre, pour chacun desdits troisième et quatrième vérins, des cinquième (40) (41) et sixième (42) (43) vérins hydrauliques à double effet, respectivement, ayant ses tiges de sortie raccordées intégralement aux tiges des troisième et quatrième vérins correspondants ; un tuyau hydraulique supplémentaire (59) (60) étant prévu pour chaque partie latérale afin de raccorder les chambres desdits cinquième (40) (41) et sixième (42) (43) vérins les unes aux autres.
